# EUROPEAN PATENT SPECIFICATION

(11) **EP 0 381 106 B1**
(45) Date of publication and mention of the grant of the patent: **13.04.1994**
(21) Application number: 90101699.8
(22) Date of filing: 29.01.1990
(51) Int. Cl.: B22D 17/20

(54) **Injection apparatus**
Einspritzvorrichtung
Appareil d'injection

(30) Priority: 30.01.1989 JP 20053/89
(43) Date of publication of application: 08.08.1990
(73) Proprietor: UBE INDUSTRIES, LTD., Ube-shi, Yamaguchi-ken 755 (JP)
(72) Inventor: Ueno, Toyoaki, c/o Ube Mach. Works of Ube Ind. Ltd, Oaza Kogushi, Ube-shi, Yamaguchi (JP)
(74) Representative: Kahler, Kurt, Dipl.-Ing.

(56) References cited:
- EP-A- 0 164 301
- EP-A- 0 233 452
- US-A- 2 454 961
- US-A- 4 088 178
- US-A- 4 655 274
- US-A- 4 743 190

## Description

The present invention relates to an injection apparatus for injecting a molten metal into a die cavity.

Injection molding machines such as die casting machines are classified into a vertical casting type in which a molten metal is injected upward into a die cavity and a horizontal casting type in which a molten metal is laterally injected into a cavity. Of these two types, the vertical casting type is generally constituted as follows. That is, an injection frame supported by a machine base is suspended in a pit beneath a floor provided under metal molds. An entire injection apparatus is supported by the injection frame so as to be set upright or tilted. This injection apparatus includes an injection cylinder connected to a hydraulic device, an injection sleeve supported concentrically with the injection cylinder by a vertically movable sleeve frame at the injection cylinder side, and a plunger coupled to a piston rod of the injection cylinder via a coupling and having a plunger tip at its distal end which is inserted to be movable forward/backward in an inner hole of the injection sleeve. The injection sleeve of the injection apparatus is tilted by a tilting cylinder, and a molten metal is teemed therein. The injection cylinder is then raised by the tilting cylinder, moved upward together with the sleeve frame by an elevating cylinder, and connected to a stationary sleeve at the metal mold side. Thereafter, when an oil is supplied to the injection cylinder, the plunger is moved upward together with the piston rod, and the molten metal in the injection sleeve is pushed by the plunger tip and injected into the die cavity via the stationary sleeve. After the molten metal is solidified, a cast product is obtained. Vertical die casting machines of this type are disclosed in, e.g., US-A- 4,088,178, 2,454,961, and 4,655,274.

In such a conventional injection apparatus, however, an injection cylinder is hydraulically activated. Therefore, since the entire apparatus is large in size, a large installation space including conduits is required, and its controllability is degraded.

### Summary of the Invention

It is, therefore, an object of the present invention to provide an injection apparatus having a smaller size and better controllability than those of conventional apparatuses.

In order to achieve the above object of the present invention, there is provided an injection apparatus comprising a plunger supported at a substantially central portion of a supporting frame, an injection sleeve, provided to be movable forward/backward with respect to the supporting frame, for receiving a distal end portion of the plunger such that the distal end portion can move forward/backward, a sleeve frame for supporting the injection sleeve, and a rotational-linear motion transmission mechanism, arranged between a motor and the supporting frame, for converting a rotational motion into a linear motion.

In addition, in the apparatus according to the present invention, the rotational-linear motion transmission mechanism comprises a screw shaft to be rotated by the motor, a plurality of balls to be engaged with a spiral groove of the screw shaft, and a ball holder fixed to the supporting frame to support the balls.

After the molten metal is teemed into the injection sleeve, the injection sleeve is moved forward together with the plunger tip and connected to the stationary sleeve at the metal mold side. Thereafter, the supporting frame is driven by the motor via the rotational-linear motion transmission mechanism, or the screw shaft is rotationally driven in synchronism with each other to move the ball holder forward together with the supporting frame so that the balls roll in the spiral groove. As a result, the plunger supported by the supporting frame moves forward, and the molten metal in the injection sleeve is pushed by the plunger tip and injected into the die cavity.

### Brief Description of the Drawings

Fig. 1 is a sectional view showing basic arrangements of a vertical die casting machine and an injection apparatus according to an embodiment of the present invention;
Fig. 2 is a sectional view taken along the line II - II of Fig. 1;
Figs. 3 and 4 show an embodiment of an injection apparatus according to the present invention, in which

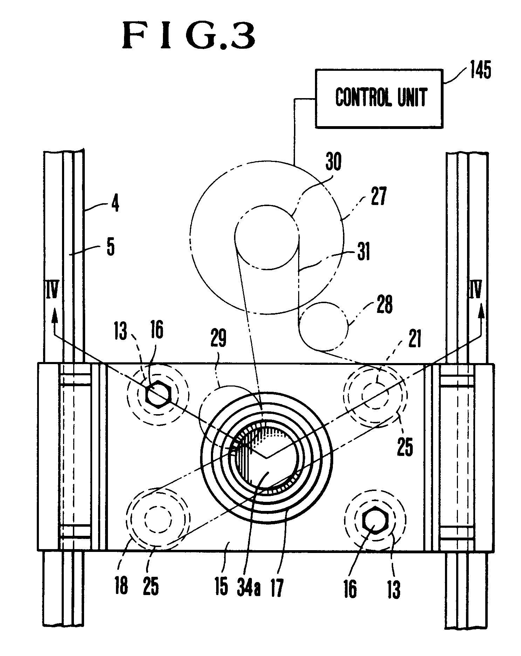

Fig. 3 is a plan view showing the injection apparatus, and

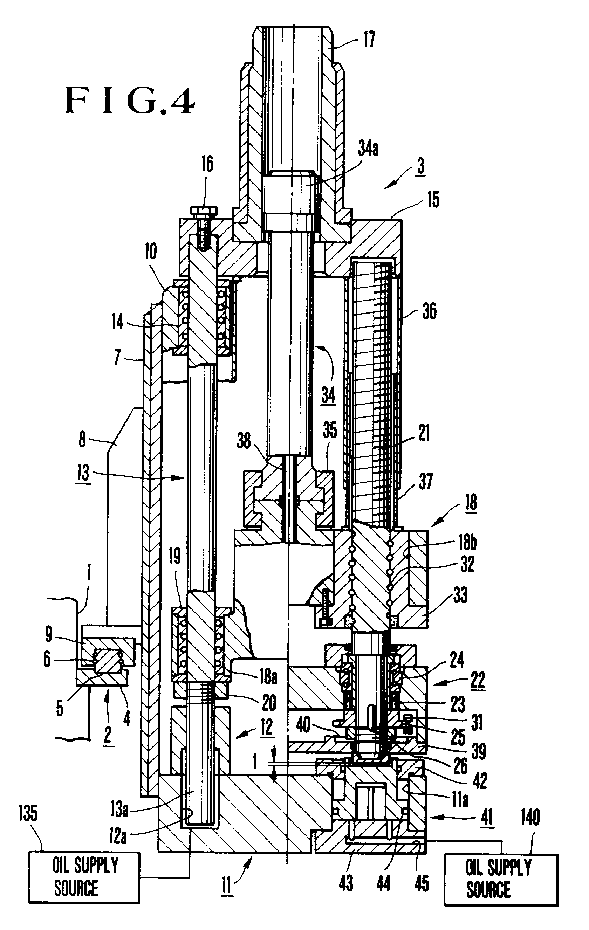

Fig. 4 is a longitudinal sectional view showing the injection apparatus taken along the line IV - IV of Fig. 3; and

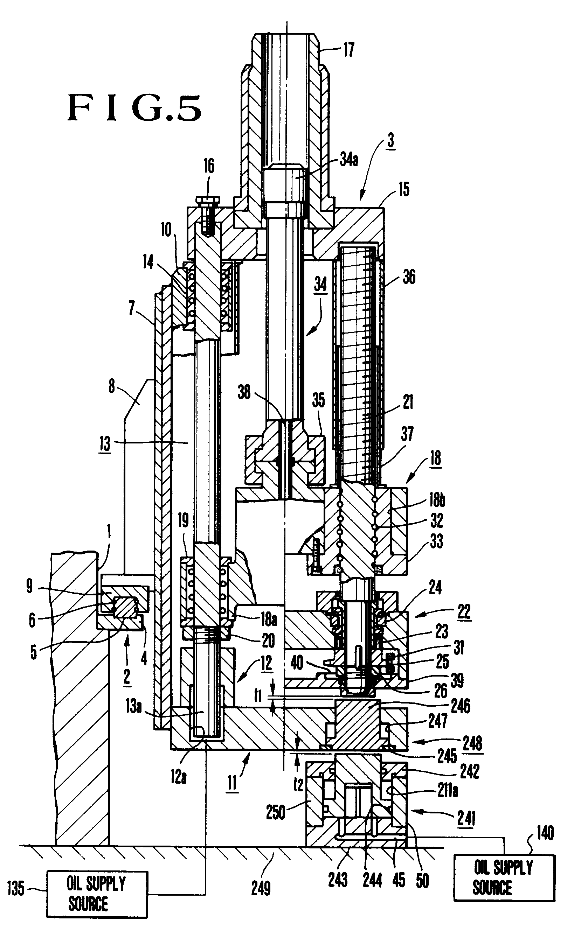

Fig. 5 is a sectional view showing the injection apparatus according to another embodiment of the present invention.

### Detailed Description of the Preferred Embodiments

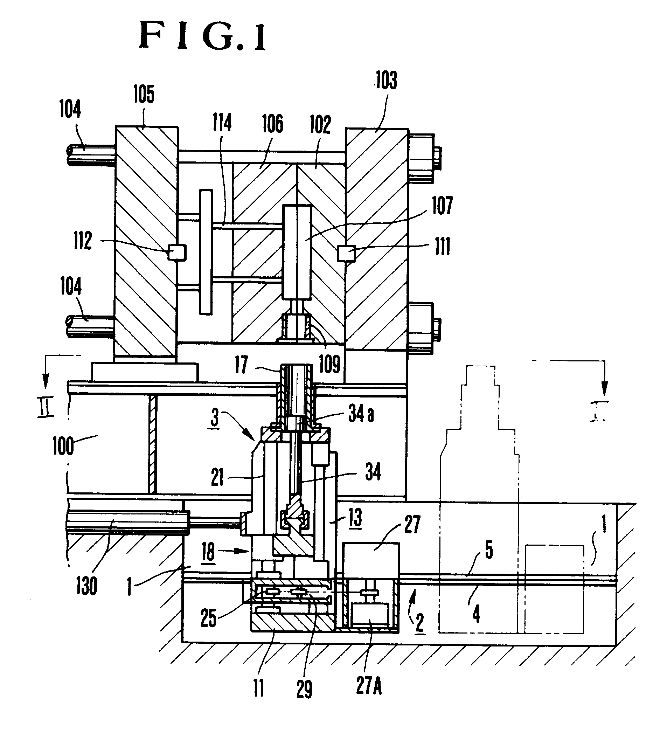

Figs. 1 to 4 show basic arrangements of a vertical die casting machine according to an embodiment of the present invention and an injection apparatus for the machine. Referring to Figs. 1 to 4, this die casting machine comprises, on its machine base 100, a vertically secured stationary platen 103 mounting a stationary metal mold 102, a movable platen 105 which moves along a plurality of columns or tie bars 104 extending horizontally from the stationary platen 103, and a movable metal mold 106 which moves from the movable platen 105 toward the stationary platen 102 to form a cavity 107. Reference numeral 109 denotes a split sleeve; 111 and 112, keys for preventing the vertical movement of the metal molds 102 and 106, respectively; and 114, a push-out sleeve for removing a cast product from the movable metal mold 106. These parts are basic elements constituting the die casting machine.

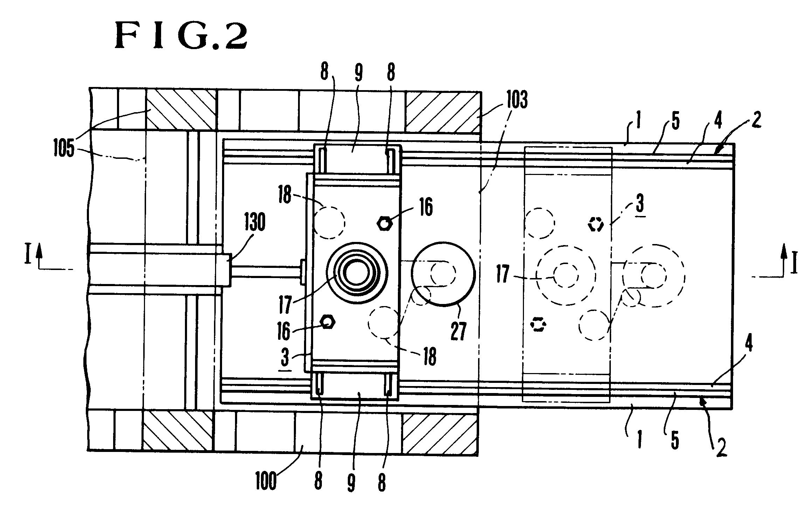

A pair of linear guides 2 (see Fig. 2) are secured to a frame 1 provided below the die casting machine. An injection apparatus generally denoted by reference numeral 3 is guided by the linear guides 2 to horizontally move between an injection position located below the metal molds and a metal mold injection position indicated by alternate long and two short dashed lines, as shown in Fig. 1. That is, each linear guide 2 includes an elongated rail 5 (see Fig. 4) supported by a supporting plate 4 at the frame 1 side and having a substantially square section. As clearly shown in Fig. 4, a plurality of balls 6 are held in ball grooves formed in both the side surfaces of the rail 5 and roll therein. A plurality of ball holders 9 each having an inverted U-shaped section and side surfaces protected by covers (not shown) are fixed to a cylindrical member 7 of the injection cylinder 3 via a reinforcing member 8. A ball groove for holding the balls 6 is formed in the inner surface of each ball holder 9. With this arrangement, when the injection apparatus 3 is driven by a driving unit 130 including a cylinder secured to the frame 1, the apparatus 3 smoothly moves while the balls 6 roll in the ball grooves.

The injection apparatus 3 supported as described above includes an annular upper frame 10 secured to the upper end of the cylindrical member 7 and a disc-like lower frame 11 secured to the lower end thereof. A ram portion 13a of an elevating shaft 13 extending upward is fitted to be movable upward/downward in a ram hole 12a of an elevating cylinder 12 provided at a position where an outer circumferential portion of the lower frame 11 is divided into two parts in the circumferential direction. An oil supply source 135 is connected to the ram hole 12a of the elevating cylinder 12 via a flexible pipe. The elevating shaft 13 is axially supported to be movable upward/downward by the upper frame 10 via a linear ball bearing 14, and a sleeve frame 15 having a substantially rectangular shape is secured to the upper end portion of the elevating shaft 13 by a plurality of bolts 16. A cylindrical injection sleeve 17 is fixed to a central portion of the sleeve frame 15 so as to be concentrical with a metal mold stationary sleeve 109 provided above the injection sleeve 17. When an oil is supplied from the oil supply source 135 to a lower portion of the ram hole 12a of the elevating cylinder 12, the injection sleeve 17 is moved upward together with the sleeve frame 15 and connected to the stationary sleeve 109.

Reference numeral 18 denotes a supporting frame having a boss portion 18a formed at a position where its outer circumferential portion is divided into two parts in the circumferential direction and supported by the elevating shaft 13 via a linear ball bearing 19. The descent limit of the supporting frame 18 is regulated by a nut 20 threadably engaged with a threaded portion of the elevating shaft 13. The supporting frame 18 is supported to be movable upward/downward by a pair of parallel screw shafts 21 having a substantially 60° phase difference in the circumferential direction with respect to the elevating shaft 13. That is, a saucer-like intermediate frame 22 is located in a space between the supporting frame 18 and the lower frame 11 and open downward, and a pair of bearing holes are formed at positions corresponding to the screw shafts 21. A small-diameter portion of the screw shaft 21 is axially supported by the bearing hole via a bearing 23 and a thrust bearing 24. A movement of the screw shaft 21 in the axial direction with respect to the intermediate frame 22 is regulated by its step portion, a sprocket 25 fixed to the small-diameter portion by a key, and a nut 26 threadably engaged with the threaded portion. A motor 27 with a brake 27A and a pair of idlers 28 and 29 are mounted on the intermediate frame 22. A chain 31 is looped between a sprocket 30 of the motor 27, the idlers 28 and 29, and the sprocket 25 on the screw shaft 21. Therefore, the screw shaft 21 is rotationally driven by the motor 27 via the chain 31. A plurality balls 32 are aligned and held in a spiral groove in the screw shaft 21. A ball holder 33 fitted in and fixed to a holder hole 18b of the supporting frame 18 by a bolt is fitted on the screw shaft 21, and balls 32 are held in a spiral ball groove formed in its inner hole. With this arrangement, when the screw shaft 21 rotates, the supporting frame 18 moves upward/downward while the balls 32 roll in the ball groove. A plunger 34 coupled by a coupling 35 extends upward from the central portion of the supporting frame 18. A plunger tip 34a as a head portion of the plunger 34 is inserted to be movable forward/backward in the inner hole. With this arrangement, a molten metal teemed in the inner hole of the injection sleeve 17 is pushed by the plunger tip 34a upon upward movement of the plunger 34 and injected into a die cavity via the stationary sleeve. Reference numeral 36 is a cover having a semicircular section and supported by a cover 37 fixed to the supporting frame 18 to cover the screw shaft 21 together with the cover 37. The cover 36 is arranged to project integrally with the supporting frame 18 along and above the upper frame 15. A water cooling conduit 38 extends through the central portion of the plunger 34 and opens to the outer circumferential portion of the supporting frame 18. A hose mounted on the opening portion is connected to a cooling pump (not shown). A lower opening end of the intermediate frame 22 is closed by an oil receiving plate 39. A saucer-like oil pan 40 is formed in the inner surface of the oil receiving plate 39 to surround the screw shaft 21.

A member generally denoted by reference numeral 41 is a molten metal urging cylinder disposed below each screw shaft 21. The molten metal urging cylinder 41 includes a cylinder hole 11a having upper and lower portions closed by cover member 42 and 43 and formed in the lower frame 11, and a piston 44 fitted to be movable forward/backward in the cylinder hole 11a. A lower cylinder chamber at the lower portion of the piston 44 is connected to a hydraulic device via an oil passage 45 and a conduit. A gap of about 1 mm denoted by reference symbol t is formed between the lower end descent limit of the screw shaft 21 and the upper end descent limit of the piston 44. With this arrangement, after the plunger tip 34a moves upward and a molten metal is filled in a cavity, an oil is supplied to the lower portion of the piston 44 to move the piston 44 upward. The piston 44 is brought into contact with the screw shaft 21 and further moved upward by about 5 mm. As a result, the plunger 34 is moved upward via the supporting frame 18 to perform a molten metal urging operation.

An operation of the injection apparatus having the above arrangement will be described below. When the entire injection apparatus 3 is pushed to the right in Fig. 2 (to the depth of Fig. 4) by the driving device 130, the injection apparatus 3 moves to the metal mold teeming position indicated by the alternate long and two short dashed lines in Fig. 1 while the balls 6 of the linear guide 2 roll in the ball groove, thereby teeming the molten metal into the injection sleeve 17. After the teeming, the injection apparatus 3 is returned to the left position (indicated by the solid line in Fig. 2) of the injection position.

When an oil is supplied from the oil supply source 135 to the ram hole 12a of the elevating cylinder 12, the elevating shaft 13 moves upward while the balls of the linear ball bearings 14 and 19 roll, and the injection sleeve 17 formed integrally with the elevating cylinder 12 is moved upward and connected to the metal mold stationary sleeve 109. In this case, the supporting frame 18 is urged against the nut 20 and moved upward by a ball screw device constituted by the screw shaft 21, the balls 32, and the ball holders 33, and the plunger tip 34a moves upward in synchronism with the injection sleeve 17, i.e., while maintaining the same positional relationship with respect to the injection sleeve 17. Therefore, the molten metal does not overflow from the injection sleeve 17.

After the injection sleeve 17 moves upward to its ascent limit and stops, the plunger 34 starts upward movement. First, when the motor 29 is started under the control of a control unit 145 to rotate the two screw shafts 21 in synchronism with each other via the chain 31, the supporting frame 18 is moved upward by the screw shafts 21 while the balls 32 roll in the grooves and the linear ball bearings 19 move along the elevating shaft 13. The plunger 34 and the plunger tip 34a with the supporting frame 18 move upward relatively to the sleeve frame 15. As a result, the plunger tip 34a moves upward in the injection sleeve 17, and the molten metal is injected in the die cavity 107 via the stationary sleeve 109 shown in Fig. 1.

After the molten metal is filled in the die cavity 107, the motor 27 is stopped under the control of the control unit 145. During injection, the intermediate frame 22 is not moved upward but kept stopped. When the molten metal is completely filled in the cavity, an oil is supplied to the lower portion of the piston 44 of the molten metal urging cylinder 41 to move the piston 44 upward. The piston 44 is brought into contact with the screw shafts 21 to move the screw shafts 21 upward together with the intermediate frame 22 by about 5 mm. Therefore, the supporting frame 18 moves upward with the plunger tip 34a, and the molten metal in the cavity 107 is compressed to perform the molten metal urging operation. During such an injection operation, the plunger 34 is cooled since cooling water is supplied to and circulated in a water cooling conduit (Fig. 4).

When the injection operation is finished, die opening is performed after an injection product is cooled and solidified, and the piston 44 of the molten metal urging cylinder 41 is moved backward. The brake 27A formed integrally with the motor 27 is released, and the motor 27 is driven to move the supporting frame 18 backward via the ball screw device, thereby moving the plunger tip 34a backward. When the plunger tip 34a and the supporting frame 18 are moved backward to predetermined positions, the supporting frame 18 contacts with the nut 20 for pushing it, and the elevating shaft 13, the supporting frame 18, and the injection sleeve 17 are simultaneously moved backward. Thereafter, the injection apparatus 3 is moved to the metal mold teeming position indicated by the alternate long and two short dashed lines in Fig. 2, thereby finishing one cycle.

Note that the injection apparatus 3 may be moved to the metal mold teeming position by tilting as in a conventional apparatus. In the apparatus according to the present invention, however, the height of the entire apparatus is decreased to be much smaller than that of a conventional hydraulic injection cylinder. Therefore, since a tilting angle is increased to reduce a filling amount, a horizontal moving system as in the above embodiment is preferred.

In the above embodiment, the ball screw device is exemplified as a rotational-linear motion transmission mechanism for transmitting the motion of the motor to the supporting frame. The ball screw device, however, may be a normal screw device constituted by a screw shaft and a nut to be threadably engaged with the screw shaft or a transmission mechanism constituted by a rack and a pinion. If the above ball screw device or a normal screw device is to be used, either a screw shaft side or a ball holder or nut side may be rotationally driven.

In addition, according to the above embodiment, the present invention is applied to the vertical die casting machine. The present invention, however, can be applied to a horizontal die casting machine and can be similarly applied to a plastic injection molding machine to obtain the same effects.

As is apparent from the above description, according to the present invention, an injection apparatus comprises a plunger supported at a substantially central portion of a supporting frame, an injection sleeve, provided to be movable forward/backward with respect to the supporting frame, for receiving a distal end portion of the plunger such that the distal end portion can move forward/backward, a sleeve frame for supporting the injection sleeve, and a rotational-linear motion transmission mechanism, arranged between a motor and the supporting frame, for converting a rotational motion into a linear motion. In addition, in the apparatus according to the present invention, the rotational-linear motion transmission mechanism comprises a screw shaft to be rotated by the motor, a plurality of balls to be engaged with a spiral groove of the screw shaft, and a ball holder fixed to the supporting frame to support the balls. Therefore, since a conventional hydraulic apparatus can be an electrical apparatus, its controllability can be improved, and the entire apparatus can be made compact. In particular, since the length in the longitudinal direction can be largely reduced, the size of an installation space can be reduced. For example, in the case of a conventional vertical type, a deep pit is required to install an injection apparatus. According to the present invention, no pit or only a shallow pit is required.

Furthermore, since the plunger moves upward while the balls roll, the movement is smoothly performed to improve the injection function. In addition, since the injection sleeve can be moved upward while the screw shafts are rotated, the operation can be successively performed from connection to injection of the injection sleeve, thereby shortening the injection cycle. Note that if a push cylinder for pushing the screw shaft after a molten metal is filled in the die cavity is provided behind the screw shaft, the molten metal urging operation upon injection can be reliably performed at a good timing. As a result, a high-quality injected product can be easily and reliably obtained.

Moreover, with the above structure, the hose mounting port of the cooling conduit for cooling the plunger tip can be provided at an opening position to external equipment separated from the plunger tip. Therefore, assembling and maintenance can be easily performed. In addition, since a hose can be mounted in a position where a temperature is not much increased, the service life of the hose can be prolonged.

Fig. 5 shows another embodiment of the present invention. This embodiment differs from the above embodiment in that a molten metal urging cylinder is not moved integrally with a plunger 34 but fixed to a stationary base 249. Only a difference between this embodiment and the above embodiment will be described below.

That is, reference numeral 248 denotes an intermediate push-out portion which is a feature of this embodiment. The intermediate push-out portion 248 is disposed below each screw shaft 21 and includes a hole portion 247 closed by a cover member 245 and formed in a lower frame 11 and a splined shaft 246 having a lower projecting portion fitted to be movable forward/backward in the hole portion 247 and an upper portion fitted to be movable upward/downward in the lower frame 11.

A member generally denoted by reference numeral 241 is urging means as a drive source for moving the splined shaft 246 of the intermediate push-out portion 248 upward/downward. In this embodiment, a molten metal urging cylinder 241, for example, is used as the urging means and placed on stationary base 249 so as to start an operation when an injection apparatus 3 is set at an injection position. A cylinder 250 has an upper cylinder hole 211a having upper and lower portions closed by cover members 242 and 243 and a lower piston 244 fitted to be movable forward/backward in the cylinder hole 211a. A lower cylinder chamber located below the piston 244 is connected to a hydraulic device 140 via an oil passage 245 formed in the cover member 243 and conduits. A gap having a width of about 1 mm and denoted by reference symbol t₁ in Fig. 5 is formed between the lower end descent limit of the screw shaft 21 and the upper end descent limit of the splined shaft 246. In addition, a gap having a width of about 3 mm and denoted by reference symbol t₂ in Fig. 5 is formed between the lower end descent limit of the splined shaft 246 and the upper end descent limit of the piston 244. With this arrangement, when an oil is supplied from the hydraulic device 140 to the lower portion of the piston 244 to move the piston 244 upward after the plunger tip 24 moves upward to fill a molten metal in a cavity 107, the piston 244 is brought into contact with the splined shaft 246 and then further moved upward by about, e.g., 5 mm. Similarly, after the splined shaft 246 is brought into contact with the screw shaft 21, the screw shaft 21 is moved upward by about, e.g, 5 mm to move the plunger 34 upward via a supporting frame 18, thereby performing a molten metal urging operation.

An operation of the injection apparatus having the above arrangement will be described below. When the entire injection apparatus 3 is pushed in the direction of the lower drawing surface by a driving device, the injection apparatus 3 moves to a molten metal teeming position while balls 6 of a linear guide 2 roll in ball grooves. Therefore, the molten metal is teemed in an injection sleeve 17. After the teeming, the injection apparatus 3 is returned to a lower position of an injection position.

When an oil is supplied to a ram hole 12a of an elevating cylinder 12, an elevating shaft 13 is moved upward while balls in linear ball bearings 14 and 19 roll, and the injection sleeve formed integrally with the elevating shaft 13 is moved upward and connected to a stationary sleeve of a metal mold. At this time, a supporting frame 18 is pushed by a nut 20 and moved upward by a ball screw device constituted by the screw shaft 21, balls 32, and ball holders 33. As a result, a plunger tip 34a moves upward while maintaining the same positional relationship with respect to the injection sleeve 17. Therefore, the molten metal does not overflow from the injection sleeve 17.

A motor 29 is started to rotate the two screw shafts 21 in synchronism with each other via a chain 31. As a result, the supporting frame 18 moves upward by an action of the screw shafts 21 while the balls 32 roll in the grooves and the linear bearings 19 move along the elevating shaft 13, and the plunger 34 and the plunger tip 34a formed integrally with the supporting frame 18 move upward. Therefore, the molten metal in the injection sleeve 17 is injected into the die cavity via the stationary sleeve.

After the molten metal is filled in the die cavity 107, the motor 27 is stopped. During injection, the intermediate frame 22 is not moved upward but kept stopped. When the molten metal is completely filled in the cavity, an oil is supplied to the lower portion of the piston 244 of the molten metal urging cylinder 241 to move the piston 244 upward. The piston 244 is brought into contact with the splined shaft 246, and the splined shaft 246 is brought into contact with the screw shaft 21, thereby moving the screw shaft 21 together with the intermediate frame 22 by about, e.g., 5 mm. Therefore, the supporting frame 18 moves upward together with the plunger tip 34a to compress the molten metal in the cavity, thereby performing a molten metal urging operation. Since cooling water is supplied to and circulated in a water cooling conduit 38 during the above injection operation, the plunger 34 is cooled.

After the injection operation is finished and an injected product is cooled and solidified, the molds are opened, and the piston 244 of the molten metal urging cylinder 241 is moved backward. The motor 27 in which a brake is released is driven to move the supporting frame 18 backward via the ball screw devices, thereby moving the plunger tip 34a backward. When the plunger tip 34a and the supporting frame 18 move backward to predetermined positions, the supporting frame 18 pushes the nut 20, and the elevating shaft 13 and the injection sleeve 17 simultaneously move backward. Thereafter, the injection apparatus 3 is moved to the metal mold teeming position, thereby finishing one cycle.

In this embodiment, the molten metal urging cylinder is separated from the injection apparatus main body and activated when the injection apparatus moves to the molten metal teeming position. As a result, the screw shaft is moved upward via the splined shaft to move the plunger upward via the supporting frame, thereby performing the molten metal urging operation. Therefore, a reaction force acting on the supporting member for supporting the injection apparatus and laterally moving upon molten metal urging can be reduced. As a result, the thickness of the supporting member can be reduced to reduce the weight of the apparatus. In addition, since no flexible conduit is used as a pressurized oil conduit to the molten metal urging cylinder, safety is significantly improved.

## Claims

1. An injection apparatus comprising:
a plunger (34) supported at a substantially central portion of a supporting frame (18);
an injection sleeve (17), provided to be relatively movable forward/backward with respect to said supporting frame (18), for receiving a distal end portion of said plunger (34) such that said distal end portion can move forward/backward;
a sleeve frame (15) for supporting said injection sleeve (17); and
a rotational-linear motion transmission mechanism (25, 21, 32, 33), arranged between a motor (27) and said supporting frame (18), for converting a rotational motion into a linear motion.

2. An apparatus according claim 1, wherein said rotational-linear motion transmission mechanism comprises:
a screw shaft (21) to be rotated by said motor (27);
a plurality of balls (32) to be engaged with a spiral groove of said screw shaft; and
a ball holder (33) fixed to said supporting frame to support said balls.

3. An apparatus according to claim 1, wherein said rotational-linear motion transmission mechanism comprises:
a plurality of screw shafts (21) to be rotated by said motor (27);
a plurality of balls (32) to be engaged with a spiral groove of each of said screw shafts; and
a ball holder (33) fixed to said supporting frame (18) to hold said balls (32) corresponding to each screw shaft (21).

4. An apparatus according to claim 1, 2 or 3 further comprising:
an elevating shaft (13) having one end fixed to said sleeve frame (15); and
a lower frame (11) for slidably supporting the other end of said elevating shaft.

5. An apparatus according to claim 4, wherein a ram structure (13a, 12a) is arranged between a lower end portion of said elevating shaft and an elevating shaft holding portion of said lower frame (11).

6. An apparatus according to any preceding claim, wherein an upper surface of a projecting portion (20) located below said elevating shaft is provided to be brought into contact with or separated from a part of a lower surface of said supporting frame (18); when said elevating shaft (13) moves upward, said projecting portion (20) is pushed up said supporting frame (18) to move said distal end portion (34a) of said plunger (34) upward in synchronism with said injection sleeve (17); when said supporting frame (18) is moved upward after said injection sleeve (17) stops at an ascent limit, said plunger tip 34a moves upward in said injection sleeve 17; and when said supporting frame (18) and said plunger (34) move downward and said supporting frame (18) and said projecting portion (20) are in contact with each other during the downward movement, said elevating shaft (13) is pushed down by said supporting frame (18).

7. An apparatus according to any preceding of claims 4 to 6, wherein the number of each of said screw shafts (21) and said elevating shafts (13) is two, and said screw shafts (21) and said elevating shafts (13) are arranged symmetrically about said plunger (34).

8. An apparatus according to any preceding of claims 4 to 7, wherein said supporting frame (18) is supported to be movable upward/downward by said elevating shaft (13) via linear ball bearings (14, 19).

9. An apparatus according to any preceding claim, further comprising:
a lower frame (11) for supporting said elements of said apparatus in a predetermined positional relationship; and
an intermediate frame (22) arranged between said lower frame (11) and said supporting frame (18),
said intermediate frame (22) supporting a lower portion of said screw shaft (21) via a thrust bearing (24).

10. An apparatus according to any preceding claim, further comprising moving means (41, 241) for vertically moving said screw shaft (21), said moving means being adjacent to a lower end of said screw shaft (21).

11. An apparatus according to claim 10, wherein said moving means (41) is mounted in said lower frame (11).

12. An apparatus according to claim 10, wherein said moving means (241) is mounted on a stationary base (249).

13. An apparatus according to claim 12, wherein said lower frame (11) is arranged between said moving means (241) mounted on said stationary base (249) and the lower end of said screw shaft (21).

14. An apparatus according to any preceding claim, wherein said moving means (241) is arranged below an injection position.

15. An apparatus according to any preceding claim, wherein a splined shaft (246) moved upward by driving said moving means (241) to push said screw shaft (21) upward is mounted in said lower frame (11).

16. An apparatus according to any preceding claim, wherein said injection sleeve (17) is movable between an injection position and a molten metal supply position.

## Patentansprüche

1. Eine Einspritzvorrichtung umfassend:
einen Druckkolben (34), der an einem im wesentlichen zentralen Abschnitt eines Tragrahmens (18) gelagert ist;
eine Einspritzhülse (17), die so beschaffen ist, daß sie bezüglich des Tragrahmens (18) nach vorn/zurück relativ beweglich ist, um einen abliegenden Endabschnitt des Druckkolbens (34) aufzunehmen, so daß sich der abliegende Endabschnitt nach vorn/zurück bewegen kann;
einen Hülsenrahmen (15) zum Lagern der Einspritzhülse (17); und
einen rotations-linearen Bewegungsübertragungsmechanismus (25,21,32,33), der zwischen einem Motor (27) und dem Tragrahmen (18) angeordnet ist, um eine Rotationsbewegung in eine lineare Bewegung umzuwandeln.

2. Vorrichtung gemäß Anspruch 1, worin der rotations-lineare Bewegungsübertragungsmechanismus umfaßt:
eine Schraubspindel (21), die von dem Motor (27) in Umlauf versetzbar ist;
eine Vielzahl von Kugeln (32), die mit einer Spiralrille der Schraubspindel in Eingriff sind; und
einen Kugelhalter (33), der zur Abstützung der Kugeln an dem Tragrahmen befestigt ist.

3. Vorrichtung gemäß Anspruch 1, worin der rotations-lineare Bewegungsübertragungsmechanismus umfaßt:
eine Vielzahl von Schraubspindeln (21), die von dem Motor (27) in Umlauf versetzbar sind;
eine Vielzahl von Kugeln (32), die mit einer Spiralrille jeder Schraubspindel in Eingriff sind; und
einen Kugelhalter (33), der an dem Tragrahmen (18) befestigt ist, um die jeder Schraubspindel (21) entsprechenden Kugeln (32) zu haltern.

4. Vorrichtung gemäß Anspruch 1, 2 oder 3, weiterhin aufweisend:
eine Hubspindel (13), die mit einem Ende an dem Hülsenrahmen (15) befestigt ist; und
einen unteren Rahmen (11) zur verschiebbaren Lagerung des anderen Endes der Hubspindel.

5. Vorrichtung gemäß Anspruch 4, worin zwischen einem unteren Endabschnitt der Hubspindel und einem Hubspindel-Lagerungsabschnitt des unteren Rahmens (11) eine Stößelkonstruktion (13a,12a) angeordnet ist.

6. Vorrichtung gemäß einem der vorhergehenden Ansprüche, worin eine obere Fläche eines unterhalb der Hubspindel gelegenen vorspringenden Abschnitts (20) dazu vorgesehen ist, mit einem Teil einer unteren Fläche des Tragrahmens (18) in Kontakt gebracht oder davon getrennt zu werden; wenn sich die Hubspindel (13) nach oben bewegt, der vorspringende Abschnitt (20) am Tragrahmen (18) nach oben gedrückt wird, um den abliegenden Endabschnitt (34a) des Druckkolbens (34) im Gleichlauf mit der Einspritzhülse (17) nach oben zu bewegen; wenn der Tragrahmen (18) nach oben bewegt wird, nachdem die Einspritzhülse (17) an einer Aufwärtshubbegrenzung stoppt, sich die Druckkolbenspitze (34a) in der Einspritzhülse (17) nach oben bewegt; und wenn sich der Tragrahmen (18) und der Druckkolben (34) nach unten bewegen und der Tragrahmen (18) und der vorspringende Abschnitt (20) während der Abwärtsbewegung miteinander in Kontakt sind, die Hubspindel (13) von dem Tragrahmen (18) nach unten gedrückt wird.

7. Vorrichtung gemäß einem der vorhergehenden Ansprüche 4 bis 6, worin die Anzahl der Schraubspindeln (21) und der Hubspindeln (13) jeweils zwei beträgt und die Schraubspindeln (21) und die Hubspindeln (13) symmetrisch um den Druckkolben (34) angeordnet sind.

8. Vorrichtung gemäß einem der vorhergehenden Ansprüche 4 bis 7, worin der Tragrahmen (18) so gelagert ist, daß er über lineare Kugellager (14,19) von der Hubspindel (13) nach oben/unten beweglich ist.

9. Vorrichtung gemäß einem der vorhergehenden Ansprüche, weiter aufweisend:
einen unteren Rahmen (11) zum Abstützen der Elemente der Vorrichtung in einem vorbestimmten Anordnungsverhältnis; und
einen Zwischenrahmen (22), der zwischen dem unteren Rahmen (11) und dem Tragrahmen (18) angeordnet ist,
wobei der Zwischenrahmen (22) einen unteren Abschnitt der Schraubspindel (21) über ein Drucklager (24) abstützt.

10. Vorrichtung gemäß einem der vorhergehenden Ansprüche, weiter umfassend Bewegungseinrichtungen (41,241) zum vertikalen Bewegen der Schraubspindel (21), wobei die Bewegungseinrichtungen an ein unteres Ende der Schraubspindel (21) angrenzen.

11. Vorrichtung gemäß Anspruch 10, worin die Bewegungseinrichtung (41) in dem unteren Rahmen (11) befestigt ist.

12. Vorrichtung gemäß Anspruch 10, worin die Bewegungseinrichtung (241) auf einer ortsfesten Grundplatte (249) befestigt ist.

13. Vorrichtung gemäß Anspruch 12, worin der untere Rahmen (11) zwischen der auf der ortsfesten Grundplatte (249) montierten Bewegungseinrichtung (241) und dem unteren Ende der Schraubspindel (21) angeordnet ist.

14. Vorrichtung gemäß einem der vorhergehenden Ansprüche, worin die Bewegungseinrichtung (241) unterhalb einer Einspritzposition angeordnet ist.

15. Vorrichtung nach einem der vorhergehenden Ansprüche, worin eine Mitnehmerwelle (246), die durch Antreiben der Bewegungseinrichtung (241) zum Aufwärtsdrücken der Schraubspindel (21) nach oben bewegt wird, in dem unteren Rahmen (11) befestigt ist.

16. Vorrichtung gemäß einem der vorhergehenden Ansprüche, worin die Einspritzhülse (17) zwischen einer Einspritzposition und einer Zuführposition für geschmolzenes Metall bewegbar ist.

## Revendications

1. Appareil d'injection comportant :
- un plongeur (34) supporté en une partie sensiblement centrale d'un châssis formant support (18) ;
- un fourreau d'injection (17), prévu pour être mobile relativement vers l'avant et vers l'arrière par rapport audit châssis formant support (18), pour recevoir une partie d'extrémité distale dudit plongeur (34) de telle sorte que ladite partie d'extrémité distale puisse se déplacer vers l'avant et vers l'arrière ;
- un châssis de fourreau (15) pour supporter ledit fourreau d'injection (17) ; et
- un mécanisme de transmission de mouvement rotatoire-linéaire (25, 21, 32, 33), disposé entre un moteur (27) et ledit châssis formant support (18), pour convertir un mouvement de rotation en un mouvement linéaire.

2. Appareil selon la revendication 1, dans lequel ledit mécanisme de transmission de mouvement rotatoire-linéaire comporte :
- un arbre fileté (21) entraîné en rotation par ledit moteur (27) ;
- un ensemble de billes (32) prévues pour coopérer avec une rainure en spirale dudit arbre fileté ; et
- une retenue de billes (33) fixée audit châssis formant support pour supporter lesdites billes.

3. Appareil selon la revendication 1, dans lequel ledit mécanisme de transmission de mouvement rotatoire-linéaire comporte :
- un ensemble d'arbres filetés (21) susceptibles d'être entraînés en rotation par ledit moteur (27) ;
- un ensemble de billes (32) prévues pour coopérer avec une rainure en spirale de chacun desdits arbres filetés ; et
- une retenue de billes (33) fixée audit châssis formant support (18) pour maintenir lesdites billes (32) correspondant à chaque arbre fileté (21).

4. Appareil selon les revendications 1, 2 ou 3, comportant en outre :
- un arbre de levage (13) comportant une extrémité fixée audit châssis de fourreau (15) ; et
- un châssis inférieur (11) prévu pour supporter en coulissement l'autre extrémité dudit arbre de levage.

5. Appareil selon la revendication 4, dans lequel une structure formant poussoir (13a, 12a) est disposée entre une partie d'extrémité inférieure dudit arbre de levage et une partie de maintien de l'arbre de levage dudit châssis inférieur (11).

6. Appareil selon l'une quelconque des revendications précédentes, dans lequel la surface supérieure d'une partie en saillie (20), disposée endessous dudit arbre de levage est prévue pour être amenée en contact avec ou séparée d'une partie d'une surface inférieure dudit châssis formant support (18) ; lorsque ledit arbre de levage (13) se déplace vers le haut, ladite partie en saillie (20) est poussée vers le haut par rapport audit châssis formant support (18) pour déplacer ladite partie d'extrémité distale (34a) dudit plongeur (34) vers le haut en synchronisme avec ledit fourreau d'injection (17) ; lorsque ledit châssis formant support (18) est déplacé vers le haut après que ledit fourreau d'injection (17) s'arrête à une limite d'ascension, ladite extrémité du plongeur (34a) se déplace vers le haut dans ledit fourreau d'injection (17) ; et lorsque ledit châssis formant support (18) et ledit plongeur (34) se déplacent vers le bas et que ledit châssis formant support (18) et ladite partie en saillie (20) sont en contact entre eux au cours du mouvement vers le bas, ledit arbre de levage (13) est poussé vers le bas par ledit châssis formant support (18).

7. Appareil selon l'une quelconque des revendications précédentes 4 à 6, dans lequel le nombre desdits arbres filetés (21) et desdits arbres de levage (13) est de deux, et lesdits arbres filetés (21) et lesdits arbres de levage (13) sont disposés symétriquement par rapport audit plongeur (34).

8. Appareil selon l'une quelconque des revendications 4 à 7, dans lequel ledit châssis formant support (18) est supporté de façon à pouvoir être déplacé vers le haut et vers le bas par ledit arbre de levage (13) par l'intermédiaire de roulements linéaires à billes (14, 19).

9. Appareil selon l'une quelconque des revendications précédentes, comportant en outre :
- un châssis inférieur (11) pour supporter lesdits éléments dudit appareil dans une relation de positionnement prédéterminée ; et
- un châssis intermédiaire (22) disposé entre ledit châssis inférieur (11) et ledit châssis formant support (18),
- ledit châssis intermédiaire (22) supportant une partie inférieure dudit arbre fileté (21) par l'intermédiaire d'un palier de butée (24).

10. Appareil selon l'une quelconque des revendications précédentes, comportant en outre un moyen de déplacement (41, 241), pour déplacer verticalement ledit arbre fileté (21), ledit moyen de déplacement étant voisin d'une extrémité inférieure dudit arbre fileté (21).

11. Appareil selon la revendication 10, dans lequel ledit moyen de déplacement (41) est monté dans ledit châssis inférieur (11).

12. Appareil selon la revendication 10, dans lequel ledit moyen de déplacement (241) est monté sur une base fixe (249).

13. Appareil selon la revendication 12, dans lequel ledit châssis inférieur (11) est disposé entre ledit moyen de déplacement (241) monté sur une base fixe (249) et l'extrémité inférieure dudit arbre fileté (21).

14. Appareil selon l'une quelconque des revendications précédentes, dans lequel ledit moyen de déplacement (241) est disposé en dessous d'une position d'injection.

15. Appareil selon l'une quelconque des revendications précédentes, dans lequel un arbre cannelé (246) déplacé vers le haut par l'entraînement dudit moyen de déplacement (241) pour pousser ledit arbre fileté (21) vers le haut est monté dans ledit châssis inférieur (11).

16. Appareil selon l'une quelconque des revendications précédentes, dans lequel ledit fourreau d'injection (17) peut se déplacer entre une position d'injection et une position d'alimentation en métal fondu.
